Europäisches Patentamt

**European Patent Office**

**Office européen des brevets**

(11) Publication number: **0 037 801**

**A1**

(12) # EUROPEAN PATENT APPLICATION

(21) Application number: **81830053.5**

(22) Date of filing: **06.04.81**

(51) Int. Cl.³: **B 23 Q 3/155**

(30) Priority: **09.04.80 IT 2126580**

(43) Date of publication of application:
**14.10.81 Bulletin 81/41**

(84) Designated Contracting States:
**DE FR GB SE**

(71) Applicant: **MANDELLI S.p.A**
**Piacenza**
**35, Via Caorsana(IT)**

(72) Inventor: **Badagnani, Giuseppe**
**50, Via C. Colombo Piacenza**
**S. POLO di Podenzano(IT)**

(74) Representative: **Perani, Aurelio et al,**
**c/o JACOBACCI-CASETTA & PERANI S.p.A 7, Via**
**Visconti di Modrone**
**I-20122 Milano(IT)**

(54) **Tool magazine for machine tools in general and for milling-boring machine in particular.**

(57) A tool magazine of the chain type, particularly for milling-boring machines, is described in which the tool carrying chain has a high rate of advancement along its path and high stoppage precision, together with silent and reliable operation.

The tool magazine (1) according to the invention includes a chain (8), constituted by a plurality of links (9), intended to be coupled releasably with respective tools (15), the said chain (8) extending along a closed path including at least one straight section (10, 11) along which the said links (9) are guided rigidly. The links (9) of the said chain (8) are provided with respective toothed portions (26), in head-to-tail alignment with each other along the said straight section (10, 11) so as to form a rack (27, 28). A motor-driven pinion (29) meshes with the said rack (27, 28) to advance the chain (8) itself along its path.

FIG. 1

EP 0 037 801 A1

Tool magazine for machine tools in general and for milling-boring machines in particular.


The present invention relates to a tool magazine for machine tools in general and for milling-boring machines in particular, of the type in which a chain, constituted by a plurality of links intended to be releasably coupled with respective tools extends along a closed path including at least one straight section along which the said links are rigidly guided.

In tool magazines of the type specified intended for modern machine tools it is necessary for the chain to advance along its path with a high velocity, so as to bring a predetermined tool rapidly into the take-up position. Moreover, the stoppage of the chain must occur with high precision, so as to ensure a firm take-up of the tool by the collecting members.

In known magazines in use at present the advancement of the chain along its path occurs irregularly; in particular periodic irregularities in the advancement having a pitch corresponding to the pitch of the links of the chain have been found. As a result of these irregularities the said requirements of speed and precision are not obtained simultaneously to the desired extent. In addition to this, the said irregularities lead to noisy operation and a reduced working life of the tool magazine itself.

The problem which is at the root of the present invention is that of devising a tool magazine having structural and functional characteristics such as to satisfy both the said requirements simultaneously, overcoming the disadvantages cited with reference to the prior art.

This problem is resolved by a tool magazine of the type specified, characterised in that the said links are provided with respective toothed portions in head-to-tail alignment with each other along the said straight section, so as to form a rack, and in that it includes a motor-driven pinion meshed with the said rack, for advancing the chain along its path as necessary.

Further characteristics and advantages of the tool magazine according to the present invention will become apparent from the following description of a preferred embodiment, given purely by way of non-limiting example, with reference to the appended drawings, in which:

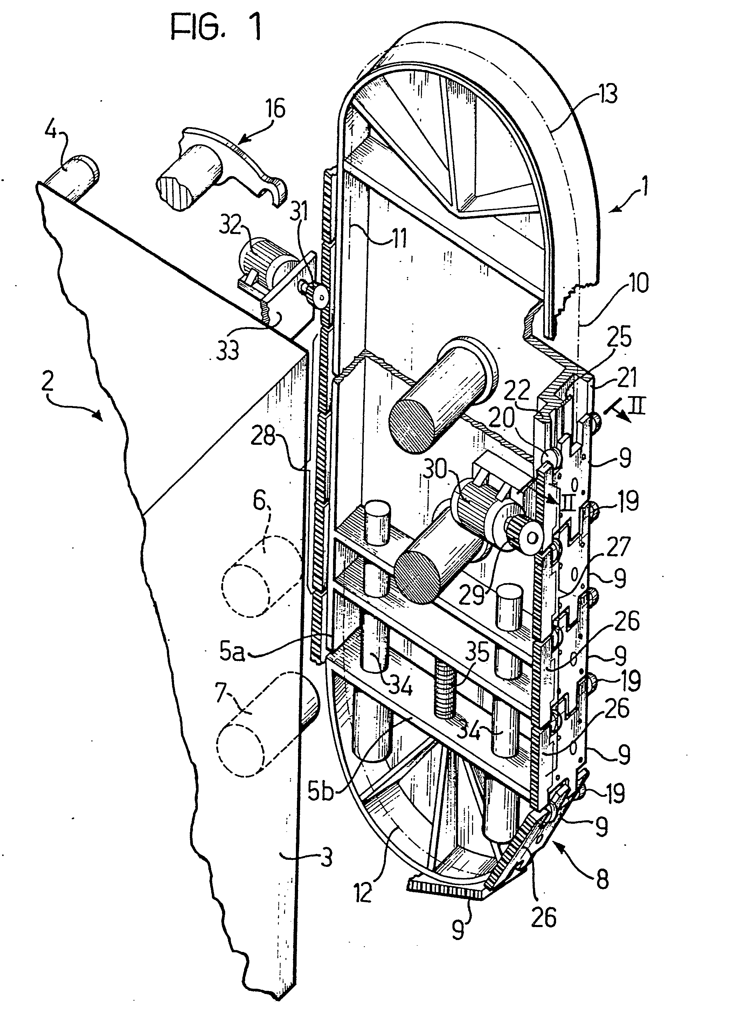

- Fig. 1 is a perspective view of a tool magazine according to the invention; and

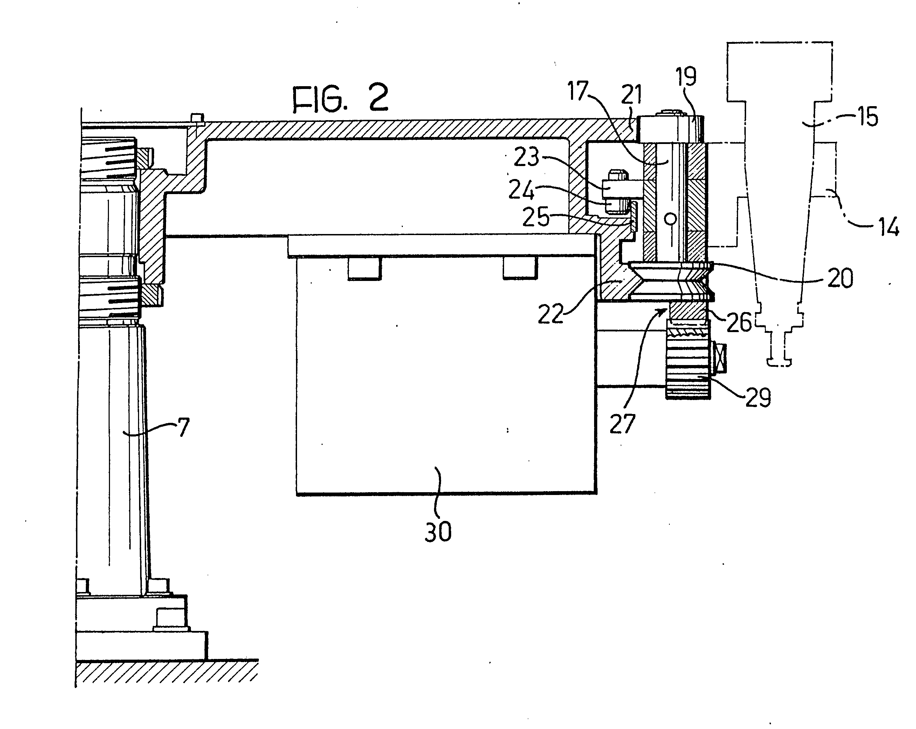

- Fig. 2 is a sectional view of a detail of the tool magazine of Figure 1, taken in plane II.

With reference to the appended drawings, by 1 is indicated in its entirely a tool magazine according to the invention, associated with a milling-boring machine 2, having an upright support 3 and a spindle 4.

The tool magazine 1 includes a support structure 5 extending vertically alongside the support and fixed to it by means of two superposed horizontal posts 6 and 7.

The support structure 5 supports, in a manner which will be described below , an endless chain 8 constituted by a plurality of identical links all indicated by 9; the endless chain 8 extends around a closed path including two equal, straight, vertical sections 10, 11 connected together at their ends by two opposed semi-circular sections 12, 13.

The links 9 are intended to couple releasably by means of suitable supports 14,with respective tools 15. Collecting members 16 are provided at the side of the machine 2 to take up a predetermined tool 15 from the magazine 1 and to carry it to the spindle 4 as necessary, or vice versa.

The links 9 are articulated to each other by pins 17 which are provided at their ends with respective rollers 19 and 20 with flat and V-shaped profiles respectively. The support structure 5 is provided with guides 21 and 22 extending along the path of the chain 8 and having flat V-shaped profiles respectively matched to the profiles of the rollers 19 and 20 so as to constitute rolling tracks for the said rollers.

Thus the support structure 5 slidingly supports the chain 8.

Each link 9 is provided with an appendage 23 which extends towards the support structure and is positioned intermediate the pins 17 by which the said link is articulated to the adjacent links and intermediate the rollers 19 and 20. The said appendage is provided at its end and to one side with a roller 24. The support structure 5 is provided with fillets 25 which extend parallel to the straight sections 10, 11 of the path of the chain 9, and are engaged by the inner surfaces of the rollers 24 of the chain links 9 which are located in correspondence with the straight sections 10, 11 so as to constitute a rolling track for the said rollers 24, with a counter-guiding action.

The links 9 which are located in correspondence with the straight sections 10, 11 of the path of the chain are thus rigidly guided with respect to the support structure 5..

Each link 9 is provided with a toothed portion 26 having a length equal to the distance between the axes of articulation and which is fixed to the link parallel to the perpendicular between these axes in a position outside the plane. defined by the axes of articulation with respect to the support structure 5.

The toothed portions 26 of the links 9 which are located along the straight sections 10, 11 are in head-to-tail alignment with each other so as to form respective racks 27 and 28.

The tool magazine 1 includes a pinion 29 rigidly fixed to the shaft of a motor 30, so as to be driven thereby. The motor is fixed to the support structure 5 so that the pinion 29 is meshed with the rack 27, and more particularly, with the toothed portion 26 of a link 9 which is located in the straight section 10.

In mesh with the rack 28 is a toothed pinion 31 which is mounted on the shaft of a transducer 32, which is in its turn supported by means of an arm 33 of the

- 5 -

machine tool 2 to detect the position of the chain along its path.

Advantageously, the support structure 5 is formed in two distinct parts 5a and 5b separated in a plane outside the posts 6 and 7 and perpendicular to the straight sections 10, 11, guide means 34 being interposed between the said parts for their mutual displacement guided in the direction of the straight sections 10 and 11, and resilient means 35 being provided between the said parts 5a and 5b to exert a predetermined force between these, away from each other, so as to induce a predetermined tension in the chain 8.

The operation of the tool magazine is described below.

According to the need to bring a predetermined link close to the collecting members 16, for example to take up the tool which is releasably mounted in the said link, the motor 30 is put into rotation. The pinion 29 induces the guided displacement of that link with which it is in mesh with the toothed portion 26 thereof, thus causing the advancement of the entire chain along its path. Since, in the straight portion 10, the toothed portions 26 of the links are disposed in head-to-tail alignment with each other so as to form a rack, the pinion 29 enters into successive engagement with the toothed portions 26 of all the links of the chain, thus causing countinuous advancement, free from irregularities.

Indeed, during the advancement of the chain, as links leave the straight section 10, new links enter it so that the formation of the rack 27 is reproduced continuously.

- 6 -

When the said predetermined link has reached the desired position, the motor 30 is stopped, thus directly causing the stoppage of the chain.

To our advantage, the position of the chain along its path is detected by the transducer 32, the signal from which can conventionally be made in a visual form or, again conventionally, may be compared with a signal corresponding to a desired position of the chain so as to stop the motor 30 when the said signals coincide.

The main advantage of the tool magazine according to the present invention lies in the unaccustomed regularity of advancement of the chain, which results in silent and reliable operation and simultaneously allows the desiderata of speed of advancement and precision of stoppage of the chain itself to be satisfied.

Claims:

1. Tool magazine (1) for machine tools in general and for milling-boring machines in particular, of the type in which a chain (8), constituted by a plurality of links (9) intended to couple releasably with respective tools (15), extends along a closed path including at least one straight section (10, 11) along which the said links (9) are rigidly guided, characterised in that the said links are provided with respective toothed portions (26) in head-to-tail alignment with each other in correspondence with the said straight section (10, 11), so as to form a rack (27,28), and in that it includes a motor-driven pinion (29) meshed with the said rack (27, 28), for advancing the said chain (8)along its path as necessary.

2. Tool magazine according to claim 1 and as described and illustrated in the appended drawings and for the purpose specified.

FIG. 1

0037801

FIG. 2

**0037801**

## EUROPEAN SEARCH REPORT

Application number

EP 81 83 0053

European Patent Office

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | B 23 Q 3/155 |
| | FR - A - 1 550 211 (G.S.P.) <br><br> * Page 3, left-hand column, lines 12-57; figures * <br> --- | 1,2 | |
| A | DE - A - 2 013 403 (HEYLIGENSTAEDT) | 1 | |
| A | US - A - 4 141 134 (ZETTLER) | 1 | |
| A | DE - A - 1 477 535 (LUDWIGSBURGER) | 1 | |

TECHNICAL FIELDS SEARCHED (Int. Cl.³)

B 23 Q

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 17.07.1981 | HORVATH |

EPO Form 1503.1    06.78